# EUROPEAN PATENT SPECIFICATION

(11) **EP 2 669 979 B1**
(45) Date of publication and mention of the grant of the patent: **21.03.2018**
(21) Application number: 11857050.6
(22) Date of filing: 23.08.2011
(51) Int. Cl.: H01M 8/04955, H01M 8/1011, H01M 8/04223, H01M 8/04746, H01M 16/00, H01M 8/0432, H01M 8/04537

(54) **FUEL CELL SYSTEM AND TRANSPORT APPARATUS COMPRISING SAME**
BRENNSTOFFZELLENSYSTEM UND TRANSPORTVORRICHTUNG DAMIT
SYSTÈME DE PILE À COMBUSTIBLE ET APPAREIL DE TRANSPORT COMPRENANT CELUI-CI

(30) Priority: 27.01.2011 JP 2011014816
(43) Date of publication of application: 04.12.2013
(73) Proprietor: Yamaha Hatsudoki Kabushiki Kaisha, Iwata-shi, Shizuoka 438-8501 (JP)
(72) Inventor: FURUKAWA Kazuyoshi, Iwata-shi Shizuoka 438-8501 (JP); MATSUMOTO Yuki, Iwata-shi Shizuoka 438-8501 (JP)
(74) Representative: Grünecker Patent- und Rechtsanwälte PartG mbB
(86) International application number: PCT/JP2011/068968
(87) International publication number: WO 2012/101853

(56) References cited:
- JP-A- 2005 302 304
- JP-A- 2007 103 115
- JP-A- 2007 109 569
- JP-A- 2008 218 398
- JP-A- 2009 026 736
- JP-A- 2009 044 835
- JP-A- 2009 064 681
- US-A1- 2001 028 967
- US-A1- 2010 068 577
- US-A1- 2010 248 054
- US-A1- 2011 003 221

## Description

### TECHNICAL FIELD

The present invention relates tor fuel cell systems and transportation equipment including the same. More specifically the present invention relates to a fuel cell system in which oxidizer is supplied to fuel cell cathodes, and transportation equipment including the fuel cell system.

### BACKGROUND ART

In this type of fuel cell systems, methanol is supplied to fuel cell anodes whereas gas which contains oxidizer is supplied to cathodes for generation of electric power. However, output from the fuel cells decreases with the lapse of power generation time. This is because a fuel cell (cathode) voltage decreases as platinum, which is used in a cathode catalyst, is oxidized to form an oxide. The oxide formation is accelerated especially when the fuel cell voltage is high. A conventional solution to this problem is to perform an oxidizer starvation process (air starvation process) in which oxidizer supply to the fuel cell cathode is temporarily stopped or decreased to bring the cathode into an oxidizer-deficient state. This causes the fuel cell voltage to drop and the oxide to be chemically reduced. Thus, after the oxidizer starvation process, fuel cell output (electromotive force in particular) is higher than before the oxidizer starvation process.

Patent Literature 1 discloses a technique of performing an oxidizer starvation processes during normal operation when constant power generation is underway, thereby recovering the fuel cell output which has decreased with the lapse of time.

According to Patent Literature 1, depending on the situation during the normal operation, a determination is made as to whether or not the oxidizer starvation process should be performed, and the oxidizer starvation process is performed when the determination has been made to perform it. For example, the oxidizer starvation process is performed when increase in the amount of electric power expected from the oxidizer starvation process is greater than the amount of electric power which will become unavailable due to the oxidizer starvation process. This enables to increase power generation efficiency of the fuel cells during the normal operation.

### CITATION LIST

### PATENT LITERATURE

Patent Literature 1: JP-A 2006-127874
Patent Literature 2: US2011003221 A1
Patent Literature 3: US2010068577 A1

### SUMMARY OF THE INVENTION

### TECHNICAL PROBLEM

Although Patent Literature 1 has disclosed a way to improve fuel cell power generation efficiency during normal operation as described above, it does not solve the problem when starting the fuel cells or when there is already a large amount of power stored in the secondary battery. Specifically, when starting the fuel cells or when the amount of power storage at the secondary battery is high, the fuel cell voltage becomes continuously high, leading to a problematic situation that the oxide tends to be formed more easily on the electrodes and thus the electrodes are deteriorated more quickly than in normal operation. However, Patent Literature 1 provides no solution to such a problem as described.

Therefore, a primary object of the present invention is to provide a fuel cell system capable of improving fuel cell power generation efficiency during normal operation and decreasing deterioration of the electrodes during startup periods and during the time when the amount of power storage at the secondary battery is large. The object also includes providing transportation equipment including the fuel cell system.

### SOLUTION TO PROBLEM

According to an aspect of the present invention, there is provided a fuel cell system which includes a fuel cell having an anode and a cathode; a secondary battery connected electrically to the fuel cell; an oxidizer supplying section for supplying an oxidizer to the cathode; and a controller to control a supplying operation of the oxidizer supplying section which supplies the cathode with the oxidizer. The controller controls the supplying operation of the oxidizer supplying section so that a number of times an oxidizer starvation process is performed in a start-up mode and a number of times the oxidizer starvation process is performed in a full-charge mode are both greater than a number of times the oxidizer starvation process is performed in a normal operation mode.

According to the present invention, it is possible to recover the output of the fuel cell and improve power generation efficiency of the fuel cell during the normal operation by performing the oxidizer starvation process during the normal operation mode. Also, to the problem that the oxide tends to be formed more easily on the electrodes and thus the electrodes tend to be deteriorated more quickly during the start-up times and the times when the charge amount at the secondary battery is high, the oxidizer starvation process is performed more frequently in the start-up mode and in the full-charge mode as well than in the normal operation mode, whereby the voltage of the cell is lowered to cause chemical reduction of the oxide. This enables to decrease electrode deterioration during the start-up time and during the time when the secondary battery has a large charge-amount, making it possible to improve durability of the electrodes. Further, by decreasing electrode deterioration during the start-up time in this way, it becomes possible to maintain a high output of the fuel cell when the system is later shifted to the normal operation mode.

Preferably, the fuel cell system further includes a first time obtaining section for obtaining a start-up time duration of the fuel cell. With this arrangement, the controller determines whether or not to perform the oxidizer starvation process, based on the start-up time duration and a first threshold value in the start-up mode. If the voltage of the fuel cell continues to be high during the start-up mode, it is likely that the oxide is formed on the electrodes, leading to deterioration of the electrodes. Therefore, the oxidizer starvation process is performed when the start-up time duration of the fuel cell has reached the first threshold value. This lowers the voltage of the fuel cell, reduces the oxide and decreases deterioration of the electrodes.

Further preferably, the fuel cell system further includes an output obtaining section for obtaining output information relevant to an output of the fuel cell. With this arrangement, the controller determines whether or not to perform the oxidizer starvation process, based on the output information and a second threshold value in the start-up mode. In the start-up mode, the output of the fuel cell increases with the lapse of time since the system is started, and it is likely that the oxide is formed on the electrodes, leading to deterioration of the electrodes. Therefore, the oxidizer starvation process is performed when the output information relevant to the output of the fuel cell has reached the second threshold value. This lowers the voltage of the fuel cell, reduces the oxide and decreases deterioration of the electrodes.

Further, preferably, the fuel cell system further includes a temperature obtaining section for obtaining a temperature of the fuel cell. With this arrangement, the controller determines whether or not to perform the oxidizer starvation process, based on the temperature of the fuel cell and a third threshold value in the start-up mode. In the start-up mode, the temperature of the fuel cell increases with the lapse of time, and it is likely that the oxide is formed on the electrodes, leading to deterioration of the electrodes. Therefore, the oxidizer starvation process is performed when the temperature of the fuel cell has reached the third threshold value. This lowers the voltage of the fuel cell, reduces the oxide and decreases deterioration of the electrodes.

Preferably the fuel cell system further includes a voltage obtaining section for obtaining voltage information relevant to a voltage of the fuel cell. With this arrangement, the controller determines whether or not to stop the oxidizer starvation process, based on the voltage information and a fourth threshold value. The oxidizer starvation process decreases the voltage of the fuel cell. Therefore, when the voltage information relevant to the voltage of the fuel cell has decreased to the fourth threshold value, it is determined that the oxidizer starvation process has been performed effectively, and the oxidizer starvation process is stopped. This enables effective execution of the oxidizer starvation process.

Further preferably, the fuel cell system further includes a second time obtaining section for obtaining an oxidizer starvation process duration time. With this arrangement, the controller determines whether or not to stop the oxidizer starvation process, based on the oxidizer starvation process duration time and a fifth threshold value. In this case, a reasonable time is set as the fifth threshold value to lead to the determination that the oxidizer starvation process has been performed effectively. Then, when the oxidizer starvation process duration time has reached the fifth threshold value, it is determined that the oxidizer starvation process has been performed effectively and the oxidizer starvation process is stopped. This enables effective execution of the oxidizer starvation process.

Further, preferably, the fuel cell system further includes an output obtaining section for obtaining output information relevant to an output of the fuel cell. With this arrangement, the controller determines whether or not to shift to the normal operation mode, based on the output information and a sixth threshold value in the start-up mode. In the start-up mode, the output of the fuel cell increases with the lapse of time until the fuel cell is ready for normal operation. Therefore, when the output information relevant to the output of the fuel cell has reached the sixth threshold value, it is determined that the fuel cell is ready for normal operation, and the system shifts to the normal operation mode. This enables smooth shift to the normal operation mode.

Preferably, the fuel cell system further includes a temperature obtaining section for obtaining a temperature of the fuel cell. With this arrangement, the controller determines whether or not to shift to the normal operation mode, based on the temperature of the fuel cell and a seventh threshold value in the start-up mode. In the start-up mode, temperature of the fuel cell increases with the lapse of time until the fuel cell is ready for normal operation. Therefore, when the temperature of the fuel cell has reached the seventh threshold value, it is determined that the fuel cell is ready for normal operation, and the system shifts to the normal operation mode. This enables smooth shift to the normal operation mode.

Further preferably, the fuel cell system further includes a third time obtaining section for obtaining a normal operation time of the fuel cell; and a retention rate calculating section for calculating an output retention rate relevant to the fuel cell. With this arrangement, the controller determines whether or not to perform the oxidizer starvation process, based on the normal operation time and the output retention rate in the normal operation mode. In the normal operation mode, the fuel cell gradually deteriorates to decrease the output of the fuel cell with the lapse of time. Therefore, the oxidizer starvation process is necessary when decrease in the output of the fuel cell exceeds a tolerable range (when the fuel cell deteriorates more quickly than expected). The fuel cell system calculates an output retention rate which correlates with the amount of decrease in the output of the fuel cell; obtains a normal operation time of the fuel cell; and determines whether or not to perform an oxidizer starvation process based on the output retention rate and the normal operation time. Specifically, the determination as to whether to perform the oxidizer starvation process or not is based on whether or not the time-course decrease in the output of the fuel cell during the normal operation mode exceeds a tolerable range. If the output of the fuel cell has decreased beyond the tolerable range, it is determined that the oxidizer starvation process is necessary. This makes it possible to know the state of deterioration of the fuel cell in the normal operation mode, which then makes it possible to perform the oxidizer starvation process only when it is necessary. As a result, the invention makes it possible to decrease deterioration of the fuel cell, to recover the output of the fuel cell, and to reliably improve power generation efficiency of the fuel cell.

Further, preferably, the fuel cell system further includes charged-power detecting section for detecting charged-power information relevant to a charge-amount of the secondary battery. With this arrangement, the controller determines whether to return to the normal operation mode or to start a constant-voltage charging of the secondary battery, based on the charged-power information and an eighth threshold value after shifting from the normal operation mode to the full-charge mode. In this case, if the charged-power information of the secondary battery is lower than the eighth threshold value in the full-charge mode, then the system returns to the normal operation mode, while on the other hand, if the charged-power information of the secondary battery has reached the eighth threshold value, constant-voltage charging of the secondary battery is started. By performing the constant-voltage charging in this way, it becomes possible to prevent over-charging of the secondary battery.

Preferably, the controller determines whether or not to stop power generation, based on the charged-power information and the ninth threshold value in the full-charge mode after starting the constant-voltage charging. In this case, when the charged-power information of the secondary battery has reached the ninth threshold value after starting the constant-voltage charging in the full-charge mode, it is determined that the secondary battery has been fully charged, and power generation at the fuel cell is stopped. This makes it possible to prevent over-charging of the secondary battery.

Further preferably, the fuel cell system further includes a fourth time obtaining section for obtaining a constant-voltage charging time of the secondary battery. With this arrangement, the controller determines whether or not to stop power generation, based on the constant-voltage charging time and the tenth threshold value in the full-charge mode after starting the constant-voltage charging. In this case, a reasonable time is set as the tenth threshold value to lead to the determination that the secondary battery has been fully charged by the constant-voltage charging. Then, when the constant-voltage charge time has reached the tenth threshold value in the full-charge mode, it is determined that the secondary battery has been fully charged, and power generation at the fuel cell is stopped. This makes it possible to prevent over-charging of the secondary battery.

Further, preferably, the fuel cell system further includes a fourth time obtaining section for obtaining a constant-voltage charging time of the secondary battery. With this arrangement, the controller determines whether or not to perform the oxidizer starvation process, based on the constant-voltage charging time and an eleventh threshold value in the full-charge mode after starting the constant-voltage charging. In the full-charge mode, the fuel cell gradually deteriorates to decrease the output of the fuel cell with the lapse of the constant-voltage charging time. Therefore, a reasonable time is set as the eleventh threshold value to indicate that the output of the fuel cell has been decreased to a level requiring the oxidizer starvation process. Then, when the constant-voltage charging time has reached the eleventh threshold value in the full-charge mode, it is determined that the oxidizer starvation process is necessary, and the oxidizer starvation process is performed. This makes it possible to decrease deterioration of the fuel cell, to recover the output of the fuel cell, and to improve power generation efficiency of the fuel cell.

In cases where a fuel cell system is applied to transportation equipment, it is desirable that the fuel cell system is capable of performing a long-time, continuous operation and that the fuel cell has a long life. In order to meet these demands, it is necessary to improve power generation efficiency in the fuel cell while decreasing electrode deterioration in the fuel cell. According to the present invention, it is possible to improve power generation efficiency in the fuel cell during normal operation, and to decrease electrode deterioration during startup periods and during the time when the amount of power storage at the secondary battery is large, so the fuel cell system is capable of performing a long time continuous operation while extending the life of the fuel cell. Therefore, the present invention is suitably applicable to transportation equipment.

In the present invention, the sixth threshold value is greater than the second threshold value; the seventh threshold value is greater than the third threshold value; the ninth threshold value is greater than the eighth threshold value; and the tenth threshold value is greater than the eleventh threshold value.

In the present invention, the term "oxidizer starvation process" refers to a process of temporarily stopping oxidizer supply to the cathode or a process of temporarily decreasing the amount of oxidizer supply to the cathode as compared to the amount supplied up to then.

The term "start-up mode" refers to a state of operation of the fuel cell system until the fuel cell becomes ready for constant power generation.

The term "normal operation mode" refers to a state of operation of the fuel cell system where the fuel cell is capable of performing constant power generation.

The term "full-charge mode" means a state of operation of the fuel cell system for fully charging the secondary battery.

The term "output retention rate relevant to the fuel cell" refers to a ratio of an output which is related to the fuel cell at a current time point with respect to an output which is related to the fuel cell at the time when the normal operation was started.

The above-described object and other objects, characteristics, aspects and advantages of the present invention will become clearer from the following detailed description of embodiments of the present invention with reference to the attached drawings.

### BRIEF DESCRIPTION OF DRAWINGS

Fig. 1 is a system diagram, showing piping of a fuel cell system according to an embodiment of the present invention.
Fig. 2 is a block diagram, showing an electrical configuration of the fuel cell system according to the embodiment of the present invention.
Fig. 3 is a flowchart which shows an operation during a start-up mode of the fuel cell system.
Fig. 4 is a continuation from the flowchart in Fig. 3.
Fig. 5 is a flowchart which shows an operation during a normal operation mode of the fuel cell system.
Fig. 6 is a flowchart which shows an operation during a full-charge mode of the fuel cell system.
Fig. 7 is a graph which shows a relationship between normal operation time, output retention rate, and necessity for oxidizer starvation process.
Fig. 8 is a waveform chart which shows an example of cell stack voltage and current in the start-up mode, the normal operation mode and the full-charge mode.
Fig. 9 is a waveform chart which shows an example of operations of system components during the oxidizer starvation process.
Fig. 10 is a waveform chart which shows an example of cell stack voltage and current during the oxidizer starvation process.
Fig. 11 is a left side view of a motorcycle equipped with a fuel cell system.

### DESCRIPTION OF EMBODIMENTS

Hereinafter, embodiments of the present invention will be described with reference to the drawings.

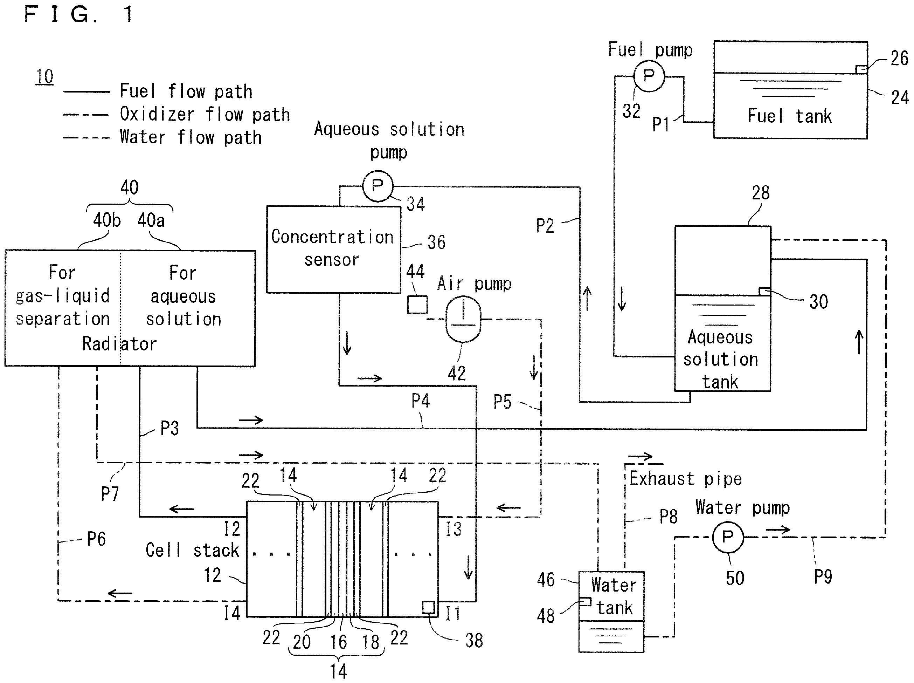

Referring to Fig. 1, a fuel cell system 10 according to an embodiment of the present invention is a direct methanol fuel cell system in which methanol (aqueous methanol solution) is used directly for generation of electric energy (power generation) without reformulation.

The fuel cell system 10 includes a fuel-cell stack (hereinafter simply called cell stack) 12. The cell stack 12 includes a plurality of fuel cells (fuel-cell cells) 14 each capable of generating electric power through electrochemical reactions between hydrogen ions based on methanol and oxygen (oxidizer) . These fuel cells 14 are placed in layers (stacked) and are connected in series. Each fuel cell 14 includes an electrolyte film 16 provided by a solid polymer film; an anode (fuel electrode) 18; and a cathode (air electrode) 20 which are opposed to each other sandwiching the electrolyte film 16. Each of the anode 18 and the cathode 20 has a platinum catalyst layer (not illustrated) on their side facing the electrolyte film 16. A separator 22 is placed between mutually adjacent fuel cells 14.

The fuel cell system 10 includes a fuel tank 24. The fuel tank 24 holds highly concentrated (preferably containing methanol approximately at 50 wt%) methanol fuel (high-concentration aqueous methanol solution) which serves as a fuel for the electrochemical reactions in the cell stack 12. The fuel tank 24 is provided with a level sensor 26. The level sensor 26 is provided by a float sensor for example, and detects a height of liquid (liquid level) inside the fuel tank 24.

The fuel tank 24 is connected to an aqueous solution tank 28 via a pipe P1. The aqueous solution tank 28 holds aqueous methanol solution which is made by diluting the methanol fuel from the fuel tank 24 to an appropriate concentration (preferably containing methanol approximately at 3 wt%) for the electrochemical reactions in the cell stack 12. The aqueous solution tank 28 is provided with a level sensor 30. The level sensor 28 is provided by a float sensor for example, and detects a height of liquid (liquid level) inside the aqueous solution tank 28. The pipe P1 is equipped with a fuel pump 32. As the fuel pump 32 is driven, methanol fuel is supplied from the fuel tank 24 to the aqueous solution tank 28.

The aqueous solution tank 28 is connected to an anode inlet I1 of the cell stack 12 via a pipe P2. From upstream side to downstream side in the flow route of the pipe P2, an aqueous solution pump 34 and a concentration sensor 36 are placed in this order. As the aqueous solution pump 34 is driven, aqueous methanol solution is supplied from the aqueous solution tank 28 to the cell stack 12. The concentration sensor 36 is provided by an ultrasonic sensor for example. The ultrasonic sensor detects a propagation time (propagation velocity) of an ultrasonic wave which varies in accordance with a concentration of aqueous methanol solution (rate of methanol in the aqueous methanol solution), in the form of voltage. A controller 52 (to be described later) detects the concentration of the aqueous methanol solution based on the voltage value. A cell stack temperature sensor 38 is provided near the anode inlet I1 of the cell stack 12. The cell stack temperature sensor 38 detects temperatures of aqueous methanol solution, which is then regarded as the temperature of the cell stack 12, and of the fuel cell 14 as well.

The cell stack 12 has an anode outlet 12, which is connected to an aqueous solution radiator 40a of a radiator unit 40 via a pipe P3. The radiator unit 40 integrally includes an aqueous solution radiator 40a and a gas-liquid separation radiator 40b. The radiator 40a is connected to the aqueous solution tank 28 via a pipe P4.

The pipes P1 through P4 serve primarily as a flow path of the fuel.

The cell stack 12 has a cathode inlet 13, which is connected to a pipe P5. An air pump 42 is placed in the flow route of the pipe P5. As the air pump 42 is driven, air which serves as an oxygen (oxidizer) containing gas is supplied to the cell stack 12 from outside. An outside air temperature sensor 44 is provided near the pipe P5 to detect outside air temperatures .

The cell stack 12 has a cathode outlet 14, which is connected to the gas-liquid separation radiator 40b via a pipe P6. The radiator 40b is connected to a water tank 46 via a pipe P7. The water tank 46 holds water for supply to the aqueous solution tank 28. The water tank 46 is provided with a level sensor 48. The level sensor 48 is provided by a float sensor for example, and detects a height of liquid (liquid level) inside the water tank 46.

The water tank 46 is provided with a pipe (exhaust pipe) P8. The pipe P8 is at an exhaust port of the water tank 46, and discharges exhaust gas from the cell stack 12 to outside.

The pipes P5 through P8 serve primarily as a flow path of the oxidizer.

The water tank 46 is connected to the aqueous solution tank 28 via a pipe P9. The pipe P9 is equipped with a water pump 50. As the water pump 50 is driven, water is supplied from the water tank 46 to the aqueous solution tank 28.

The pipe P9 described above serves as a flow path of water.

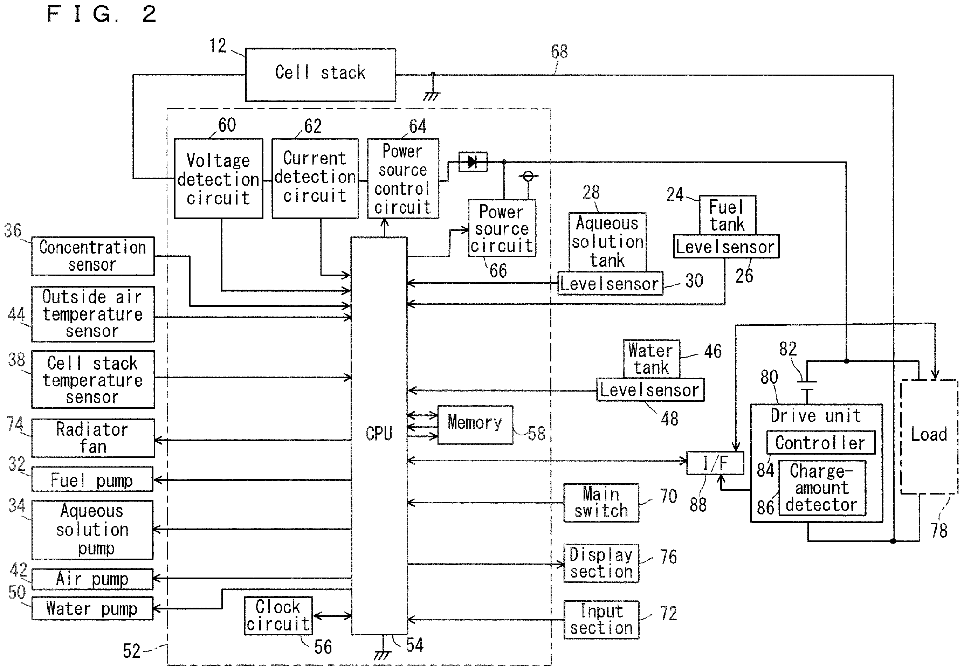

Next, Reference will be made to Fig. 2 to describe an electrical configuration of the fuel cell system 10.

The fuel cell system 10 includes a controller 52. The controller 52 includes a CPU 54, a clock circuit 56, a memory 58, a voltage detection circuit 60, a current detection circuit 62, a power source control circuit 64 and a power source circuit 66.

The CPU 54 performs necessary calculations and controls operations of the fuel cell system 10. The clock circuit 56 provides clock signals to the CPU 54. The memory 58 is provided by an EEPROM for example, and stores programs and data for the control of operations of the fuel cell system 10 as well as calculation data, etc. The voltage detection circuit 60 detects voltages of the cell stack 12. The current detection circuit 62 detects electric currents which flow through the electric circuit 68. The power source control circuit 64 controls outputs (voltage and current) of the cell stack 12. The power source circuit 66 supplies the electric circuit 68 with a predetermined voltage.

The CPU 54 in the controller 52 receives input signals from a main switch 70 and an input section 72. As the main switch 70 is turned ON, an operation start command is sent to the controller 52 and as the main switch 70 is tuned OFF, an operation stop command is sent to the controller 52. If the main switch 70 is turned OFF while the cell stack 12 is in its power generation operation, an operation stop command and a power generation stop command are sent to the controller 52. The input section 72 serves as an entry port of various commands and information input.

The CPU 54 also receives detection signals from the level sensors 26, 30, 48, the concentration sensor 36, the cell stack temperature sensor 38 and the outside air temperature sensor 44. Further, the CPU 54 receives voltage detection values from the voltage detection circuit 60, and electric current detection values from the current detection circuit 62.

The CPU 54 controls system components such as the fuel pump 32, the aqueous solution pump 34, the air pump 42, the water pump 50 and a radiator fan 74. The radiator fan 74 is near the radiator 40 and cools the radiator 40.

The CPU 54 also controls a display section 76 for informing the user of various kinds of information. The CPU 54 further controls the power source control circuit 64 which is a circuit to control outputs (voltage and current) of the cell stack 12.

The electric circuit 68 is connected with a load 78, a drive unit 80 and a secondary battery 82. The load 78 is provided by an electric motor for example. The drive unit 80 is electrically connected to the load 78 and the secondary battery 82. The drive unit 80 includes a controller 84 for controlling driving operations of the load 78; and a charge-amount detector 86 for detecting amounts of electric charge in the secondary battery 82. The secondary battery 82 compensates for the output from the cell stack 12, is charged with electric power from the cell stack 12, and discharges the electric power to supply it to the load 78, the system components, etc.

The CPU 54 receives charge-amount detection values from the charge-amount detector 86 via an interface circuit 88. The CPU 54 calculates charge rates of the secondary battery 82 from the inputted charge-amount detection values and a capacity value of the secondary battery 82. Also, the CPU 54 calculates outputs from the cell stack 12 based on the voltage detection values from the voltage detection circuit 60 and the current detection values from the current detection circuit 62. Then, the CPU 54 calculates output retention rates based on the calculated outputs of the cell stack 12 and recorded outputs stored in the memory 58.

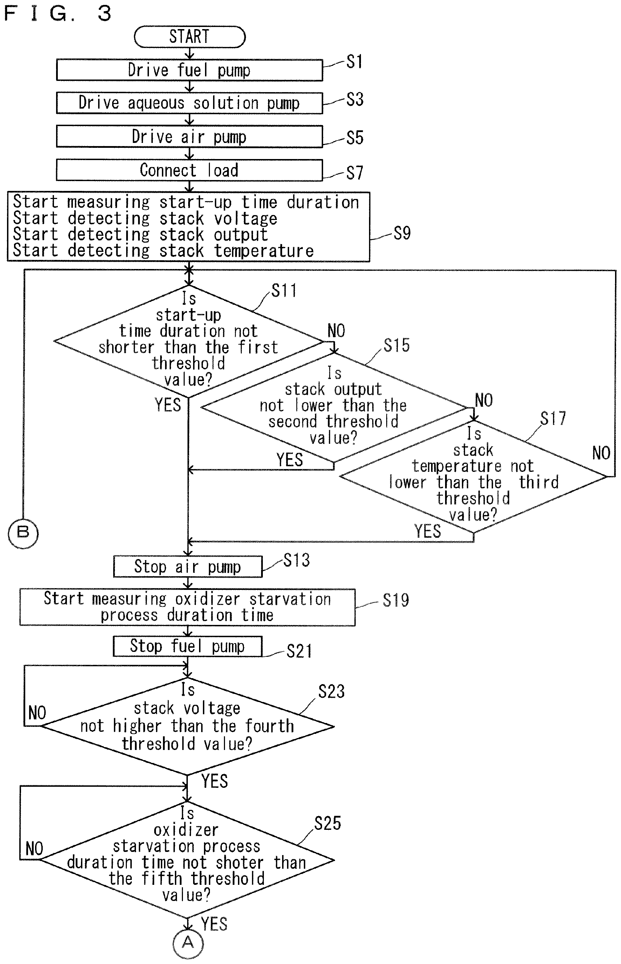

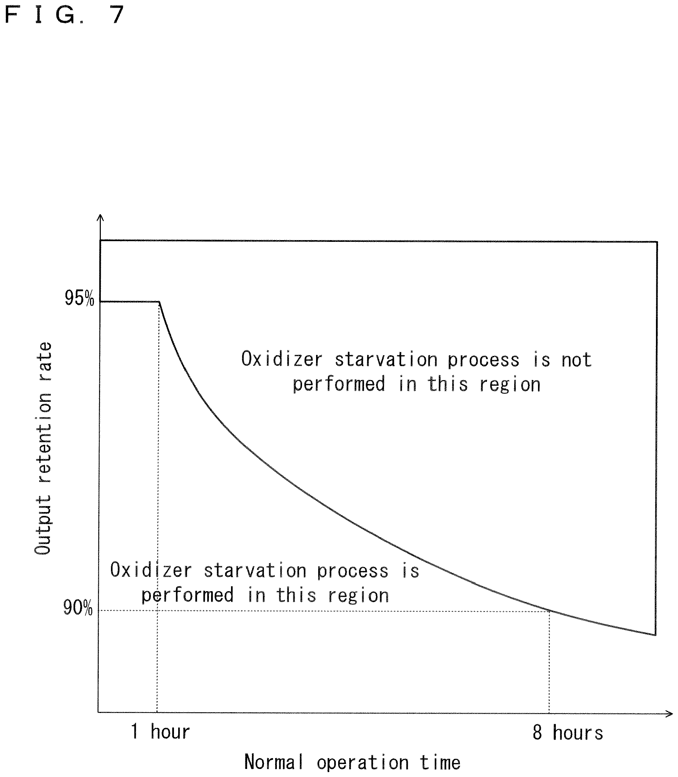

The memory 58 serves as the storage means, and stores programs, threshold values, various calculation values and detection values, etc. for execution of the operations shown in Fig. 3 through Fig. 6. Also, the memory 58 stores table data which indicate a relationship, as shown in Fig. 7, between normal operation time, output retention rate, and necessity for oxidizer starvation process of the fuel cell system 10.

In the present embodiment, the oxidizer supplying section includes the air pump 42. The controller includes the CPU 54. The CPU 54 and the clock circuit 56 represent the first through the fourth time obtaining section. The cell stack temperature sensor 38 represents the temperature obtaining section. The voltage detection circuit 60 represents the voltage obtaining section. The output obtaining section includes the CPU 54, the voltage detection circuit 60 and the current detection circuit 62. The retention rate calculating section includes the CPU 54, the memory 58, the voltage detection circuit 60 and the current detection circuit 62. The charged-power detecting section includes the CPU 54 and the charge-amount detector 86.

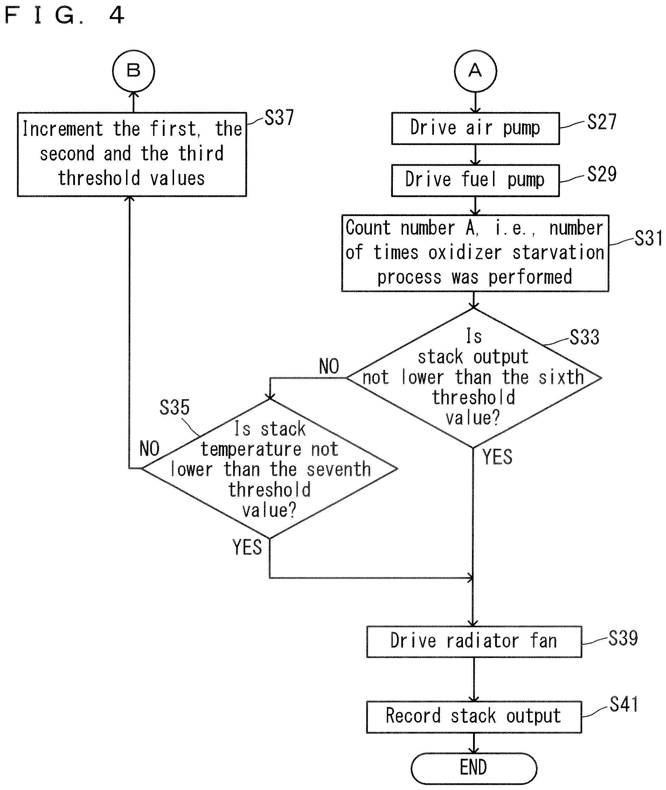

Next, reference will be made to Fig. 3 and Fig. 4, to describe an example of operation in a start-up mode of the fuel cell system 10.

When, for example, the main switch 70 is turned ON, the fuel cell system 10 is started.

Thereafter, power generation at the cell stack 12, i.e., at the fuel cells 14 is started if the CPU 54 detects that the secondary battery 82 has a charge rate lower than a predetermined value (preferably 50%). At this time, the CPU 54 starts the fuel pump 32 (Step S1), starts the aqueous solution pump 34 (Step S3), starts the air pump 42 (Step S5), and brings the power source control circuit 64 into connection with the load 78 (Step S7). Then, the CPU 54 starts measuring a start-up time duration of the fuel cell system 10; the voltage detection circuit 60 starts detecting voltages of the cell stack 12; the CPU 54 starts detecting outputs of the cell stack 12; and the cell stack temperature sensor 38 starts detecting temperatures of the cell stack 12 (Step S9).

The CPU 54 determines whether or not the start-up time duration of the fuel cell system 10 is not shorter than a first threshold value (preferably one minute) (Step S11). If the start-up time duration of the fuel cell system 10 is not shorter than the first threshold value, the program goes to Step S13. On the other hand, if the start-up time duration of the fuel cell system 10 is shorter than the first threshold value, determination is made as to whether or not the output of the cell stack 12 is not lower than a second threshold value (preferably 300 W) (Step S15). If Step S15 finds that the output of the cell stack 12 is not lower than the second threshold value, the program goes to Step S13. On the other hand, if the output of the cell stack 12 is lower than the second threshold value, determination is made as to whether or not the temperature of the cell stack 12 is not lower than a third threshold value (preferably 20 degrees Celsius) (Step S17). If Step S17 finds that the temperature of the cell stack 12 is not lower than the third threshold value, the program goes to Step S13. On the other hand, if the temperature of the cell stack 12 is lower than the third threshold value, the program returns to Step S11.

When Step S13 is executed to stop the air pump 42 and start an oxidizer starvation process, the CPU 54 starts measuring an oxidizer starvation process duration time (Step S19) and the fuel pump 32 is stopped (Step S21).

Then, the CPU 54 determines whether or not the voltage of the cell stack 12 is not higher than a fourth threshold value (preferably 5 volts) (Step S23). This gives an indication as to whether or not the air pump 42 is really stopped. If the voltage of the cell stack 12 is higher than the fourth threshold value, then the program stays there. On the other hand, if the voltage of the cell stack 12 is not higher than the fourth threshold value, the program goes to Step S25, where the CPU 54 determines whether or not the oxidizer starvation process duration time is not shorter than a fifth threshold value (preferably 10 seconds). If the oxidizer starvation process duration time is shorter than the fifth threshold value, the program stays there. On the other hand, if the oxidizer starvation process operation time is not shorter than the fifth threshold value, operation of the air pump 42 is resumed and the oxidizer starvation process is stopped (Step S27); operation of the fuel pump 32 is resumed (Step S29) , and a number A, which represents the number of times the oxidizer starvation process was performed, i.e., the number of the oxidizer starvation process periods is counted (Step S31).

Thereafter, the CPU 54 determines whether or not the output of the cell stack 12 is not lower than a sixth threshold value (preferably 500 watts) (Step S33). If the output of the cell stack 12 is lower than the sixth threshold value, determination is made as to whether or not the temperature of the cell stack 12 is not lower than a seventh threshold value (preferably 65 degrees Celsius) (Step S35). If the temperature of the cell stack 12 is lower than the seventh threshold value, then the first threshold value, the second threshold value and the third threshold value are incremented by respective predetermined values (Step S37), and the program returns to Step S11. Preferably, the first threshold value is incremented by one minute, the second threshold value is incremented by 50 watts, and the third threshold value is incremented by 5 degrees Celsius.

On the other hand, if Step S33 finds that the output of the cell stack 12 is not lower than the sixth threshold value, or Step S35 finds that the temperature of the cell stack 12 is not lower than the seventh threshold value, then the radiator fan 74 is started (Step S39), an output of the cell stack 12 at this time point is recorded in the memory 58 (Step S41), the operation in the start-up mode is stopped, and the program shifts to an operation under a normal operation mode. The operation in the start-up mode is executed for approximately 10 minutes for example.

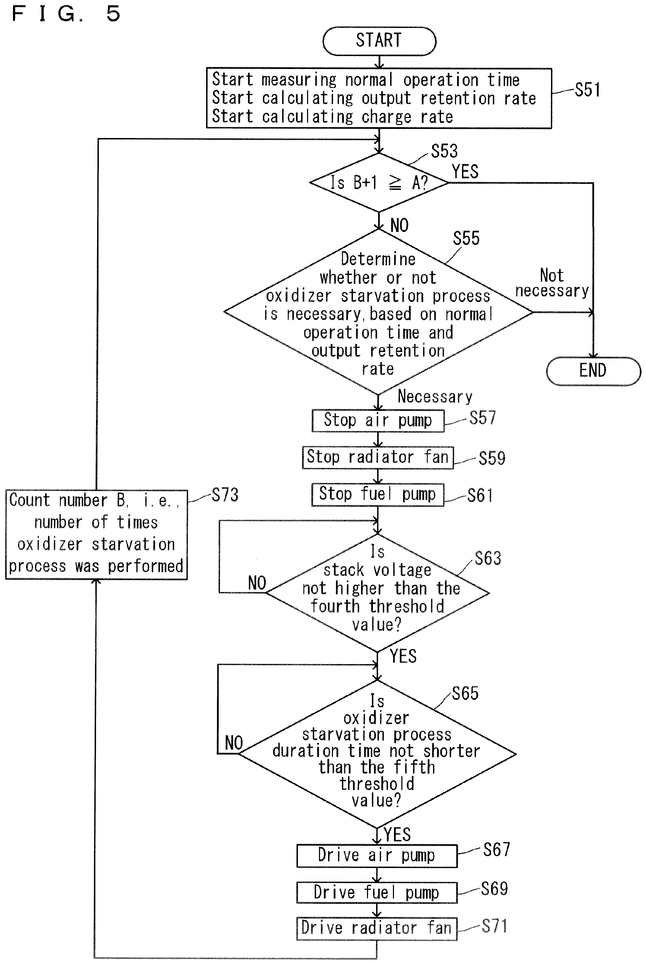

Next, reference will be made to Fig. 5 to describe an example of operations in the normal operation mode of the fuel cell system 10.

First, the CPU 54 starts measurement of a normal operation time (accumulated time of power generation) of the fuel cell system 10, starts calculation of output retention rates, and starts calculation of charge rates of the secondary battery 82 (Step S51). In the present embodiment, the term "output retention rate" refers to a ratio of an output of the cell stack 12 at a current time point with respect to an output of the cell stack 12 when the normal operation was started. Specifically, the term refers to a ratio of a current output of the cell stack 12 with respect to the output of the cell stack 12 which was stored in the memory 58 in Step S41 in Fig.4.

Then, the CPU 54 determines whether or not a value which results from adding one to a number B, which represents the number of times the oxidizer starvation process was performed in the normal operation mode is not smaller than the number A, which represents the number of times the oxidizer starvation process was performed in the start-up mode, or in other words the system checks if (B+1≥A) is true or not (Step S53); and if the answer is not B+1≥A, determines whether or not an oxidizer starvation process is necessary, based on the normal operation time and output retention rate (Step S55). In this process, reference is made to table data which shows a relationship shown in Fig. 7 to see if it is necessary to carry out an oxidizer starvation process.

If Step S55 determines that an oxidizer starvation process is necessary, then the air pump 42 is stopped to start the oxidizer starvation process (Step S57), the radiator fan 74 is stopped (Step S59), and the fuel pump 32 is stopped (Step S61) .

Then, the CPU 54 determines whether or not the voltage of the cell stack 12 is not higher than the fourth threshold value (Step S63). If the voltage of the cell stack 12 is higher than the fourth threshold value, then the program stays there. On the other hand, if the voltage of the cell stack 12 is not higher than the fourth threshold value, the program goes to Step S65, where the CPU 54 determines whether or not the oxidizer starvation process duration time is not shorter than the fifth threshold value. If the oxidizer starvation process duration time is shorter than the fifth threshold value, the program stays there. On the other hand, if the oxidizer starvation process duration time is not shorter than the fifth threshold value, operation of the air pump 42 is resumed and the oxidizer starvation process is stopped (Step S67) ; operation of the fuel pump 32 is resumed (Step S69), and operation of the radiator fan 74 is resumed (Step S71). Then, the number B, which represent the number of times the oxidizer starvation process was performed is counted (Step S73), and the program returns to Step S53.

If Step S53 finds B+1≥A, or if Step S55 has determined that there is no need for an oxidizer starvation process, then the program stops the mode and moves to a full-charge mode. It should be noted here that any case where Step S53 gives YES in the operation shown in Fig. 5 is a case where the number B, which represents the number of times the oxidizer starvation process was performed in the normal operation mode, is smaller than the number A, which represents the number of times the oxidizer starvation process was performed in the start-up mode, by one.

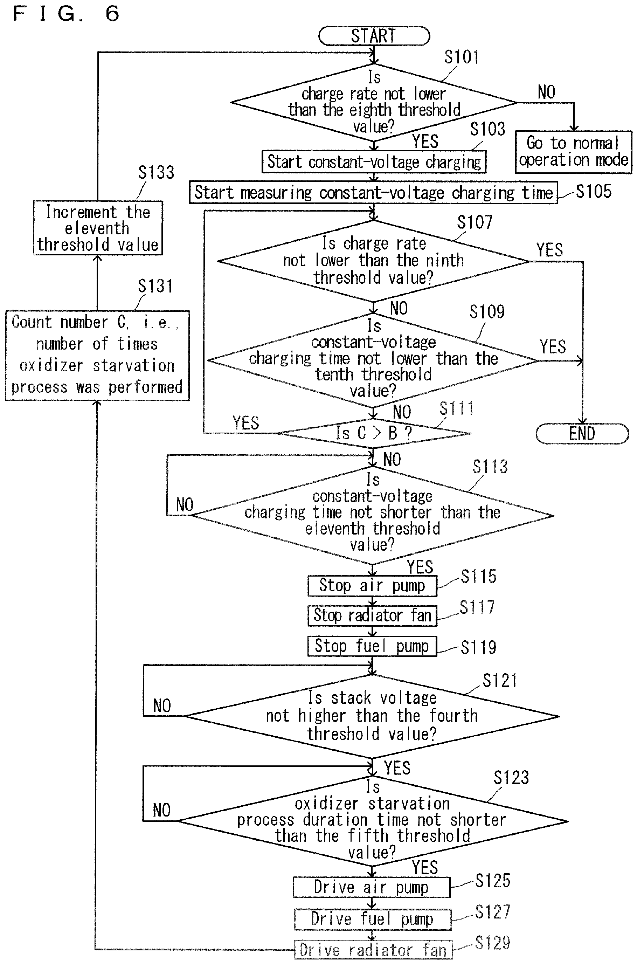

Further, reference will be made to Fig. 6 to describe an example of operations of the fuel cell system 10 in a full-charge mode.

First, a determination is made as to whether or not the charge rate of the secondary battery 82 is not lower than an eighth threshold value (preferably 90%) (Step S101) . If the charge rate of the secondary battery 82 is lower than the eighth threshold value, then the program returns to the normal operation mode. On the other hand, if the charge rate of the secondary battery 82 is not lower than the eighth threshold value, constant-voltage charging is started (Step S103), and the CPU 54 starts measurement of a constant-voltage charging time (Step S105). In the present embodiment, it is possible to perform the constant-voltage charging of the secondary battery 82 by controlling the output (voltage and current) of the cell stack 12 by means of the power source control circuit 64. By performing the constant-voltage charging, it becomes possible to prevent over-charging of the secondary battery 82.

Then, a determination is made as to whether or not the charge rate of the secondary battery 82 is not lower than a ninth threshold value (preferably 100%) (Step S107) . If the charge rate of the secondary battery 82 is lower than the ninth threshold value, then a determination is made as to whether or not the constant-voltage charging time is not shorter than a tenth threshold value (preferably 1 hour) (Step S109). If the constant-voltage charging time is shorter than the tenth threshold value, then the CPU 54 determines whether or not the number C, which represents the number of times the oxidizer starvation process was performed in the full-charge mode, is greater than the number B, which represents the number of times the oxidizer starvation process was performed in the normal operation mode, (C>B) (Step Sill) . If the answer is not C>B, then a determination is made as to whether or not the constant-voltage charging time is not shorter than an eleventh threshold value (preferably 10 minutes) (Step S113). If the constant-voltage charging time is shorter than the eleventh threshold value, the program stays there. On the other hand, if the constant-voltage charging time is not shorter than the eleventh threshold value, the air pump 42 is stopped and an oxidizer starvation process is started (Step S115), the radiator fan 74 is stopped (Step S117), and the fuel pump 32 is stopped (Step S119) .

Then, the CPU 54 determines whether or not the voltage of the cell stack 12 is not higher than the fourth threshold value (Step S121). If the voltage of the cell stack 12 is higher than the fourth threshold value, then the program stays there. On the other hand, if the voltage of the cell stack 12 is not higher than the fourth threshold value, the program goes to Step S123, where the CPU 54 determines whether or not the oxidizer starvation process duration time is not shorter than the fifth threshold value. If the oxidizer starvation process duration time is shorter than the fifth threshold value, the program stays there. On the other hand, if the oxidizer starvation process duration time is not shorter than the fifth threshold value, operation of the air pump 42 is resumed and the oxidizer starvation process is stopped (Step S125), operation of the fuel pump 32 is resumed (Step S127), and operation of the radiator fan 74 is resumed (Step S129). Then, the number C, which represents the number of times the oxidizer starvation process was performed is counted (Step S131); the eleventh threshold value is incremented by a predetermined value (preferably 10 seconds) (Step S133) ; and then the program returns to Step S101.

If Step S111 finds that the number C, which represents the number of times the oxidizer starvation process was performed in the full-charge mode, is greater than the number B, which represents the number of times the oxidizer starvation process was performed in the normal operation mode, then the program returns to Step S107.

Also, if Step S107 finds that the charge rate of the secondary battery 82 is not lower than the ninth threshold value, or if Step S109 finds that the constant-voltage charging time is not shorter than the tenth threshold value, power generation is stopped and the program comes to an end.

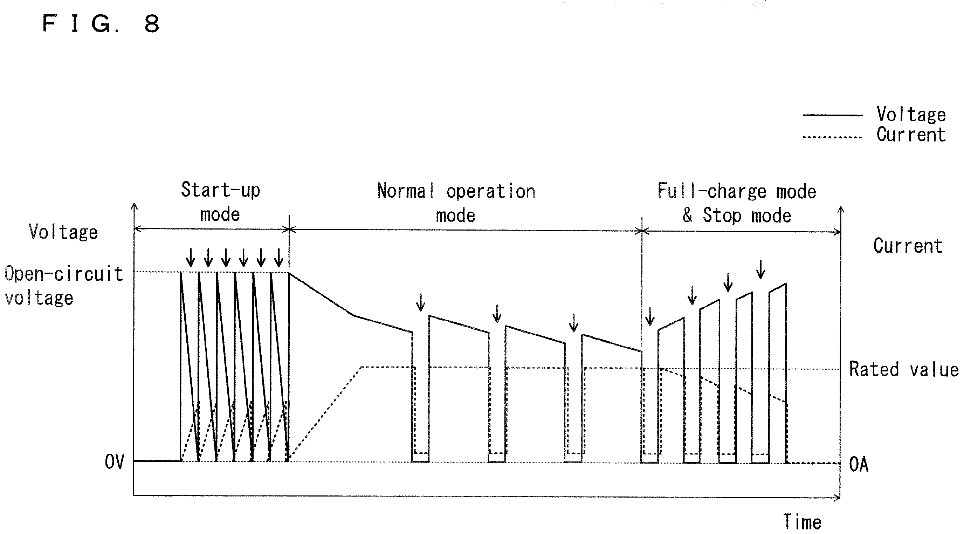

According to the fuel cell system 10 which operates as has been described thus far, the voltage and the current of the cell stack 12 follow a pattern as shown in Fig. 8 for example. In Fig. 8, a downward arrow (↓) indicates a point when an oxidizer starvation process was executed.

According to the fuel cell system 10, it is possible to recover the output of the cell stack 12 and improve power generation efficiency of the cell stack 12 during the normal operation by performing oxidizer starvation processes during the normal operation mode. Also, to the problem that the oxide tends to be formed more easily on the electrodes (especially on the cathodes 20) and thus the electrodes tend to be deteriorated more quickly during start-up times and during the time when the charge amount at the secondary battery 82 is high, the oxidizer starvation process is performed more frequently in the start-up mode and the full-charge mode as well, than in the normal operation mode, whereby the voltage of the cell stack 12 is lowered to reduce the oxide. This enables to reduce electrode deterioration during the start-up time and during the time when the secondary battery 82 has a large charge-amount, making it possible to improve durability of the electrodes. Further, by reducing electrode deterioration during the start-up time in this way, it becomes possible to maintain a high output of the cell stack 12 when the system is later shifted to the normal operation mode. The advantages described above are benefits from performing oxidizer starvation processes frequently during the periods other than the normal operation mode.

In the start-up mode, an oxidizer starvation process is performed when the start-up time duration of the cell stack 12 has reached the first threshold value. This lowers the voltage of the cell stack 12, reduces the oxide and decreases deterioration of the electrodes.

In the start-up mode, an oxidizer starvation process is performed when the output of the cell stack 12 has reached the second threshold value. This lowers the voltage of the cell stack 12, reduces the oxide and decreases deterioration of the electrodes.

In the start-up mode, an oxidizer starvation process is performed when the temperature of the cell stack 12 has reached the third threshold value. This lowers the voltage of the cell stack 12, reduces the oxide and decreases deterioration of the electrodes.

When the voltage of the cell stack 12 has lowered to the fourth threshold value during an oxidizer starvation process, the system determines that the oxidizer starvation process has been performed effectively and stops the oxidizer starvation process. This enables effective execution of the oxidizer starvation process.

When the oxidizer starvation process duration time has reached the fifth threshold value, the system determines that the oxidizer starvation process has been performed effectively and stops the oxidizer starvation process. This enables effective execution of the oxidizer starvation process.

When the output of the cell stack 12 has reached the sixth threshold value in the start-up mode, the fuel cell system 10 determines that the cell stack 12 is ready for normal operation, and shifts to the normal operation mode. This enables smooth shift to the normal operation mode.

When the temperature of the cell stack 12 has reached the seventh threshold value in the start-up mode, the fuel cell system 10 determines that the cell stack 12 is ready for normal operation, and shifts to the normal operation mode. This enables smooth shift to the normal operation mode.

The fuel cell system 10 requires an oxidizer starvation process when decrease in the output of the cell stack 12 exceeds an allowable range (when the cell stack 12 deteriorates more quickly than expected). The fuel cell system 10 calculates an output retention rate which correlates with the amount of decrease in the output of the cell stack 12, obtains a normal operation time of the cell stack 12, and determines whether or not to perform an oxidizer starvation process based on the output retention rate and the normal operation time. Specifically, the determination as to whether or not to perform the oxidizer starvation process is based on whether or not the time-course decrease in the output of the cell stack 12 during the normal operation mode exceeds a tolerable range. If the output of the cell stack 12 has decreased beyond the tolerable range, the system determines that an oxidizer starvation process is necessary. This makes it possible to know the state of deterioration of the cell stack 12 in the normal operation mode, which then makes it possible to perform an oxidizer starvation process only when it is necessary. As a result, it becomes possible to reduce deterioration of the cell stack 12, to recover the output of the cell stack 12, and to reliably improve power generation efficiency of the cell stack 12.

In the full-charge mode, if the charge rate of the secondary battery 82 is lower than the eighth threshold value, then the system returns to the normal operation mode, while on the other hand, if the charge rate of the secondary battery 82 has reached the eighth threshold value, constant-voltage charging of the secondary battery 82 is started. By performing the constant-voltage charging in this way, it becomes possible to prevent over-charging of the secondary battery 82.

When the charge rate of the secondary battery 82 has reached the ninth threshold value after starting the constant-voltage charging of the secondary battery 82 in the full-charge mode, the system determines that the secondary battery 82 has been fully charged, and stops power generation at the secondary battery 82. This makes it possible to prevent over-charging of the secondary battery 82.

When the constant-voltage charging time has reached the tenth threshold value in the full-charge mode, the system determines that the secondary battery 82 has been fully charged, and stops power generation at the cell stack 12. This makes it possible to prevent over-charging of the secondary battery 82.

When the constant-voltage charging time has reached the eleventh threshold value in the full-charge mode, the system determines that an oxidizer starvation process is necessary, and performs the oxidizer starvation process. By this arrangement, it becomes possible to reduce deterioration of the cell stack 12, to recover the output of the cell stack 12, and to improve power generation efficiency of the cell stack 12.

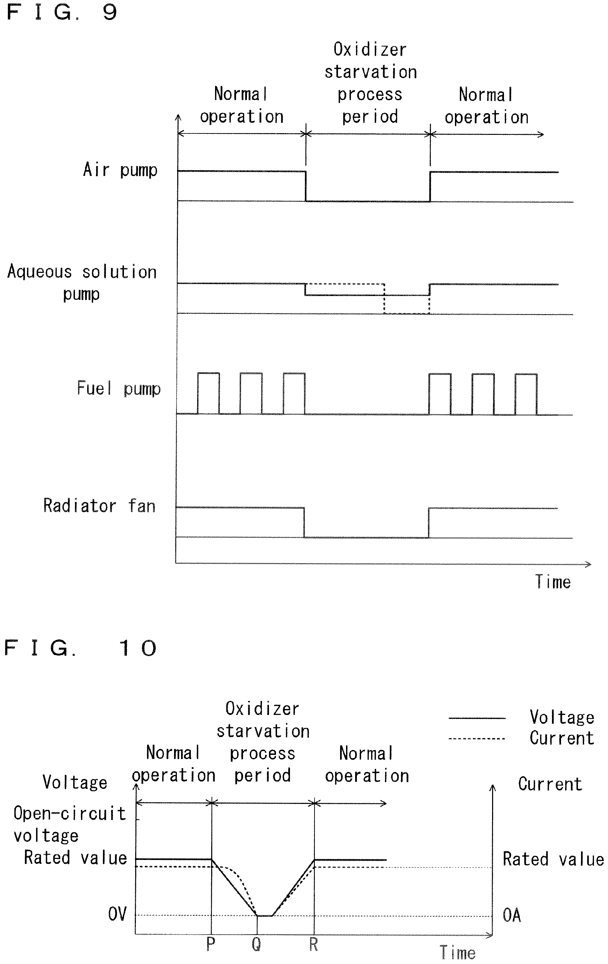

It should be noted here that as shown in Fig. 9 for example, not only the air pump 42 is stopped but also the fuel pump 32 and the radiator fan 74 may be stopped in the oxidizer starvation process, while the operation of the aqueous solution pump 34 is slowed. This enables to reduce power consumption by system components of the fuel cell system 10 during the oxidizer starvation process. Also, by not stopping the operation of the aqueous solution pump 34 but slowing the operation of the aqueous solution pump 34 thereby maintaining a certain level of flow of aqueous methanol solution in the oxidizer starvation process, it becomes possible to remove carbon dioxide, which occurs at the anode 18, to outside of the cell stack 12, and to stabilize electric potential in the cell stack 12. Further, this improves the output of the cell stack 12 after the oxidizer starvation process.

The aqueous solution pump 34 may be controlled as shown in broken lines in Fig. 9 so that the aqueous solution pump 34 will have a shorter stoppage time.

Further, in the oxidizer starvation process, the power source control circuit 64 may control the voltage of the cell stack 12 in a generally V-shaped pattern as shown in Fig. 10 so that the voltage is gradually reduced from the rated voltage to zero and then gradually increased from zero to the rated voltage. Reducing the voltage of the cell stack 12 in such a pattern enables to reduce the electric current of the cell stack 12. Therefore, it becomes possible to prevent damage to the cell stack 12 and/or the secondary battery 82 caused by high currents not smaller than the rated current. Also, in the oxidizer starvation process, oxygen consumption rate may be increased, which will shorten Period P-Q shown in Fig. 10. This makes it possible to shorten the oxidizer starvation process time period (Period P-R in Fig. 10).

The fuel cell system 10 described thus far is suitably applicable to transportation equipment.

Hereinafter, description will cover a case where the fuel cell system 10 is mounted on a motorcycle 100.

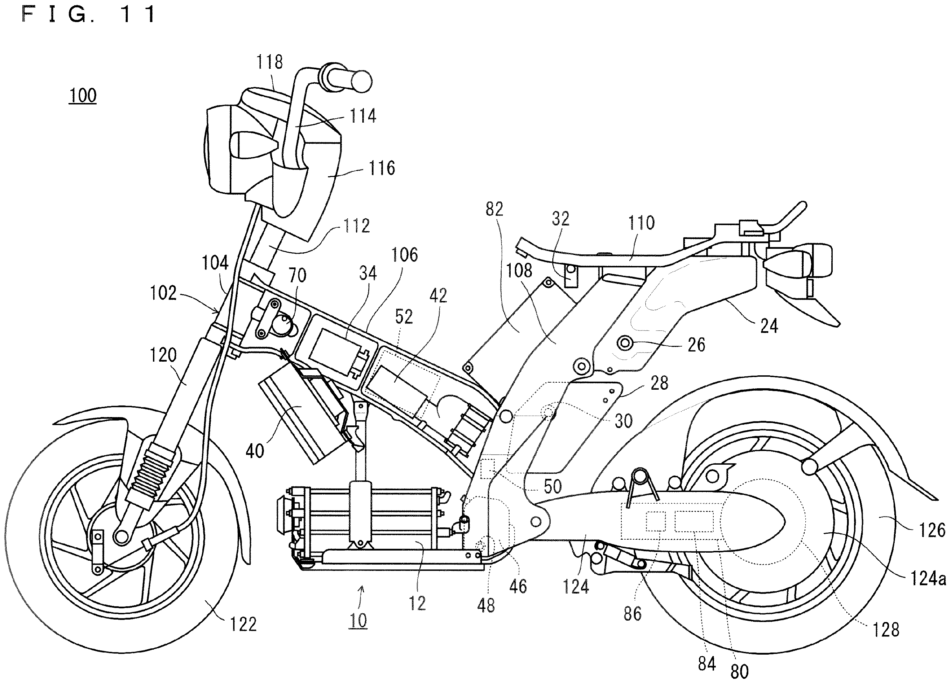

Referring to Fig. 11, the motorcycle 100 will be described. It is noted that the terms right and left, front and rear, up and down as used in relation to the motorcycle 100 are determined from the rider's position on a seat of the motorcycle 100, with the rider facing toward a handlebar 114.

Referring to Fig. 11, the motorcycle 100 includes a body frame 102. The body frame 102 has a head pipe 104; a front frame 106 extending from the head pipe 104 obliquely in a rearward and downward direction; and a rear frame 108 connected with a rear end portion of the front frame 106 and erected obliquely in a rearward and upward direction. The rear frame 108 has an upper end portion, to which seat rails 110 are fixed for mounting an unillustrated seat.

A steering shaft 112 is pivotably inserted through the head pipe 104. At a top end of the steering shaft 112, there is attached a handlebar support member 116 to which a handlebar 114 is fixed. At a top end of the handle bar support member 116, a display/input device 118 is disposed. The display/input device 118 includes an input section 72 and a display section 76.

The steering shaft 112 has a lower end mounted with a front fork 120, and a front wheel 122 is rotatably mounted to lower ends of the front fork 120.

The rear frame 108 has a lower end portion, where a swing arm (rear arm) 124 is attached pivotably. The swing arm 124 has a rear end portion 124a which houses an electric motor 128 of an axial gap type for example, connected with a rear wheel 126 for rotating the rear wheel 126. In the present example, the electric motor 128 represents the load 78.

In the motorcycle 100 as described, components of the fuel cell system 10 are disposed primarily along the body frame 102.

The cell stack 12 is suspended from the front frame 106 to be placed below the front frame 106. The radiator unit 40 is disposed below the front frame 106 but above the cell stack 12. The fuel tank 24, the aqueous solution tank 28 and the water tank 46 are disposed in this order from top to down, between a pair of platy members of the rear frame 108. The secondary battery 82 is disposed ahead of the fuel tank 24, above the front frame 106. The fuel pump 32 is disposed above the secondary battery 82. The aqueous solution pump 34 and the air pump 42 are placed in a storage space on the left side of the front frame 106. The controller 52 and the water pump 46 are placed in a storage space on the right side of the front frame 106. The main switch 70 is placed on the front frame 106. The swing arm 124 is provided therein with a drive unit 80 which is electrically connected to the electric motor 128. The drive unit 80 includes the controller 84 for controlling rotating drive of the electric motor 128; and the charge-amount detector 86 for detecting an amount of electric charge in the secondary battery 82.

In cases where the fuel cell system 10 is applied to the motorcycle 100 as in this embodiment, it is desirable that the fuel cell system 10 is capable of performing a long time continuous operation and that the cell stack 12 has a long life. The fuel cell system 10 is capable of improving power generation efficiency of the cell stack 12 in the normal operation, and reducing electrode deterioration at start-up times and when the secondary battery 82 has a large charge-amount, so the fuel cell system 10 is capable of performing a long time continuous operation while extending the life of the cell stack 12. Therefore, the fuel cell system 10 is suitably applicable to the motorcycle 100.

It should be noted here that although Step S9 in Fig. 3 shows an example that measurement of the start-up time duration is started when the load is connected in Step S7, the present invention is not limited to this. For example, measurement of the start-up time duration may be started when driving of the fuel pump 32 is started in Step S1.

In the start-up mode shown in Fig. 3 and Fig. 4, both of Steps S23 and S25 must give YES for the program to go to Step S27 to stop the oxidizer starvation process. However, the present invention is not limited to this. The oxidizer starvation process may be stopped when either of Steps S23 and S25 gives YES.

In the embodiment described above, Step S53 in Fig. 5 determines whether or not B+1≥A, and Step S111 in Fig. 6 determines whether or not C>B, to control the operation of the air pump 42 so that both of the number of oxidizer starvation processes in the start-up mode and the number of oxidizer starvation processes in the full-charge mode will be greater than the number of oxidizer starvation processes in the normal operation mode. However, the present invention is not limited to this. For example, Step S53 in Fig. 5 may determine if B=A/2. Also, there may be an arrangement where a predetermined value is set and the air pump 42 is controlled within a parameter range that satisfies A ≥ the predetermined value, C ≥ the predetermined value, and B < the predetermined value. Further, the number of oxidizer starvation processes in the start-up mode and the number of oxidizer starvation processes in the normal operation mode may be equal to each other.

In the embodiment described above, necessity for an oxidizer starvation process is determined as shown in Fig. 7, based on output retention rate and normal operation time. However, the present invention is not limited to this. For example, necessity for an oxidizer starvation process may be determined based on output decrease rate (=100-output retention rate) and normal operation time.

In the embodiment described above, the output information is provided by the output of the cell stack 12. However, the present invention is not limited to this. The output information may be provided by an output from the fuel cell 14. The voltage information is provided by the voltage of the cell stack 12. However, the present invention is not limited to this. The voltage information may be provided by a voltage of the fuel cell 14. The charged-power information is provided by the charge rate of the secondary battery 82. However, the present invention is not limited to this. The charged-power information may be provided by a charge-amount of the secondary battery 82.

The temperature obtaining section may be provided by a sensor which directly detects temperatures of the fuel cell 14 itself.

In the embodiment described above, description was made for a case where air is supplied to the cathodes 20 of the cell stack 12 (the fuel cells 14) by the air pump 42. However, the present invention is not limited to this. In the present invention, any gas which contains oxidizer may be supplied to the cathodes 20, and the oxidizer supplying section may include whatever type of gas-supplying pump.

In the embodiment described above, the fuel is provided by methanol, and the fuel aqueous solution is provided by aqueous methanol solution. However, the present invention is not limited to this. The fuel may be provided by alcoholic fuel such as ethanol, and the aqueous fuel solution may be provided by aqueous alcoholic solution such as aqueous ethanol solution.

The fuel cell system according to the present invention is suitably applicable not only to motorcycles but also any transportation equipment such as automobiles, marine vessels, etc.

The present invention is also applicable to fuel cell systems which include reformers, and fuel cell systems in which hydrogen is supplied to fuel cells. Also, the present invention is applicable to stationary type fuel cell systems, and further, to mobile type fuel cell systems which may be used in electronic products such as personal computers, portable devices, etc.

The present invention being thus far described in terms of preferred embodiments, it is obvious that these may be varied in many ways within the scope of the present invention. The scope of the present invention is only limited by the accompanied claims.

### REFERENCE SIGNS LIST

- 10: Fuel cell system
- 12: Fuel-cell stack
- 14: Fuel cell
- 18: Anode
- 20: Cathode
- 38: Cell stack temperature sensor
- 42: Air pump
- 52, 84: Controllers
- 54: CPU
- 56: Clock circuit
- 58: Memory
- 60: Voltage detection circuit
- 62: Current detection circuit
- 82: Secondary battery
- 86: Charge-amount detector
- 100: Motorcycle

## Claims

1. A fuel cell system (10) comprising:
a fuel cell (14) including an anode and a cathode (20);
a secondary battery (82) connected electrically to the fuel cell (14);
an oxidizer supplying section for supplying an oxidizer to the cathode (20); and
a controller (52) to control a supplying operation of the oxidizer supplying section which supplies the cathode (20) with the oxidizer;
**characterized in that**
the controller (52) controls the supplying operation of the oxidizer supplying section so that a number of times an oxidizer starvation process is performed in a start-up mode and a number of times the oxidizer starvation process is performed in a full-charge mode of the secondary battery (82) are both greater than a number of times the oxidizer starvation process is performed in a normal operation mode.

2. The fuel cell system (10) according to Claim 1, further comprising a first time obtaining section for obtaining a start-up time duration of the fuel cell (14),
wherein the controller (52) determines whether or not to perform the oxidizer starvation process, based on the start-up time duration and a first threshold value in the start-up mode.

3. The fuel cell system (10) according to Claim 1, further comprising an output obtaining section for obtaining output information relevant to an output of the fuel cell (14),
wherein the controller (52) determines whether or not to perform the oxidizer starvation process, based on the output information and a second threshold value in the start-up mode.

4. The fuel cell system (10) according to Claim 1, further comprising a temperature obtaining section (38) for obtaining a temperature of the fuel cell (14),
wherein the controller (52) determines whether or not to perform the oxidizer starvation process, based on the temperature of the fuel cell (14) and a third threshold value in the start-up mode.

5. The fuel cell system (10) according to Claim 1, further comprising a voltage obtaining section (60) for obtaining voltage information relevant to a voltage of the fuel cell (14),
wherein the controller (52) determines whether or not to stop the oxidizer starvation process, based on the voltage information and a fourth threshold value.

6. The fuel cell system (10) according to Claim 1, further comprising a second time obtaining section for obtaining an oxidizer starvation process duration time,
wherein the controller (52) determines whether or not to stop the oxidizer starvation process, based on the oxidizer starvation process duration time and a fifth threshold value.

7. The fuel cell system (10) according to Claim 1, further comprising an output obtaining section for obtaining output information relevant to an output of the fuel cell (14),
wherein the controller (52) determines whether or not to shift to the normal operation mode, based on the output information and a sixth threshold value in the start-up mode.

8. The fuel cell system (10) according to Claim 1, further comprising a temperature obtaining section (38) for obtaining a temperature of the fuel cell (14),
wherein the controller (52) determines whether or not to shift to the normal operation mode, based on the temperature of the fuel cell (14) and a seventh threshold value in the start-up mode.

9. The fuel cell system (10) according to Claim 1, further comprising a third time obtaining section for obtaining a normal operation time of the fuel cell (14); and
a retention rate calculating section for calculating an output retention rate relevant to the fuel cell (14), the output retention rate being a ratio of an output which is related to the fuel cell (14) at a current time point with respect to an output which is related to the fuel cell (14) at the time when the normal operation was started,
wherein the controller (52) determines whether or not to perform the oxidizer starvation process, based on the normal operation time and the output retention rate in the normal operation mode.

10. The fuel cell system (10) according to Claim 1, further comprising charged-power detecting section for detecting charged-power information relevant to a charge-amount of the secondary battery (82),
wherein the controller (52) determines whether to return to the normal operation mode or to start a constant-voltage charging of the secondary battery (82), based on the charged-power information and an eighth threshold value after shifting from the normal operation mode to the full-charge mode of the secondary battery (82).

11. The fuel cell system (10) according to Claim 10, wherein the controller (52) determines whether or not to stop power generation, based on the charged-power information and the ninth threshold value in the full-charge mode of the secondary battery (82) after starting the constant-voltage charging.

12. The fuel cell system (10) according to Claim 10, further comprising a fourth time obtaining section for obtaining a constant-voltage charging time of the secondary battery (82),
wherein the controller (52) determines whether or not to stop power generation, based on the constant-voltage charging time and the tenth threshold value in the full-charge mode of the secondary battery (82) after starting the constant-voltage charging.

13. The fuel cell system (10) according to Claim 10, further comprising a fourth time obtaining section for obtaining a constant-voltage charging time of the secondary battery (82),
wherein the controller (52) determines whether or not to perform the oxidizer starvation process, based on the constant-voltage charging time and an eleventh threshold value in the full-charge mode of the secondary battery (82) after starting the constant-voltage charging.

14. Transportation equipment comprising the fuel cell system (10) according to one of Claims 1 through 13.

## Patentansprüche

1. Brennstoffzellensystem (10) umfassend:
eine Brennstoffzelle (14) mit einer Anode und einer Kathode (20);
eine Sekundärbatterie (82), die elektrisch mit der Brennstoffzelle (14) verbunden ist;
einen Oxidationsmittel-Zuführabschnitt zum Zuführen eines Oxidationsmittels zu der Kathode (20); und
eine Steuereinheit (52) zum Steuern eines Zufuhrbetriebs des Oxidationsmittel-Zuführabschnitts, der die Kathode (20) mit dem Oxidationsmittel versorgt;
**dadurch gekennzeichnet, dass**
die Steuereinheit (52) den Zufuhrbetrieb des Oxidationsmittel-Zuführabschnitts so steuert, dass eine Häufigkeit, mit der ein Oxidationsmittelverarmungsprozess in einem Startmodus ausgeführt wird, und eine Häufigkeit, mit der der Oxidationsmittelverarmungsprozess in einem Volllademodus der Sekundärbatterie (82) ausgeführt wird, beide größer sind als eine Häufigkeit, mit der der Oxidationsmittelverarmungsprozess in einem normalen Betriebsmodus ausgeführt wird.

2. Brennstoffzellensystem (10) nach Anspruch 1, weiterhin umfassend einen ersten Zeitermittlungsabschnitt zum Ermitteln einer Startzeitdauer der Brennstoffzelle (14),
wobei die Steuereinheit (52) basierend auf der Startzeitdauer und einem ersten Schwellenwert im Startmodus bestimmt, ob der Oxidationsmittelverarmungsprozess auszuführen ist oder nicht.

3. Brennstoffzellensystem (10) nach Anspruch 1, weiterhin umfassend einen Ausgabeermittlungsabschnitt zum Ermitteln von Ausgabeinformationen, die für eine Ausgabe der Brennstoffzelle (14) relevant sind,
wobei die Steuereinheit (52) auf der Basis der Ausgabeinformationen und eines zweiten Schwellenwertes im Startmodus bestimmt, ob der Oxidationsmittelverarmungsprozess auszuführen ist oder nicht.

4. Brennstoffzellensystem (10) nach Anspruch 1, weiterhin umfassend einen Temperaturermittlungsabschnitt (38) zum Ermitteln einer Temperatur der Brennstoffzelle (14),
wobei die Steuereinheit (52) basierend auf der Temperatur der Brennstoffzelle (14) und einem dritten Schwellenwert im Startmodus bestimmt, ob der Oxidationsmittelverarmungsprozess auszuführen ist oder nicht.

5. Brennstoffzellensystem (10) nach Anspruch 1, weiterhin umfassend einen Spannungsermittlungsabschnitt (60) zum Ermitteln von Spannungsinformationen, die für eine Spannung der Brennstoffzelle (14) relevant sind,
wobei die Steuereinheit (52) basierend auf den Spannungsinformationen und einem vierten Schwellenwert bestimmt, ob der Oxidationsmittelverarmungsprozess gestoppt werden soll oder nicht.

6. Brennstoffzellensystem (10) nach Anspruch 1, weiterhin umfassend einen zweiten Zeitermittlungsabschnitt zum Ermitteln einer Oxidationsmittelverarmungsprozessdauer,
wobei die Steuereinheit (52) basierend auf der Oxidationsmittelverarmungsprozessdauer und einem fünften Schwellenwert bestimmt, ob der Oxidationsmittelverarmungsprozess zu stoppen ist oder nicht.

7. Brennstoffzellensystem (10) nach Anspruch 1, weiterhin umfassend einen Ausgabeermittlungsabschnitt zum Ermitteln von Ausgabeinformationen, die für eine Ausgabe der Brennstoffzelle (14) relevant sind,
wobei die Steuereinheit (52) basierend auf den Ausgabeinformationen und einem sechsten Schwellenwert im Startmodus bestimmt, ob in den Normalbetriebsmodus gewechselt werden soll oder nicht.

8. Brennstoffzellensystem (10) nach Anspruch 1, weiterhin umfassend einen Temperaturermittlungsabschnitt (38) zum Ermitteln einer Temperatur der Brennstoffzelle (14),
wobei die Steuereinheit (52) basierend auf der Temperatur der Brennstoffzelle (14) und einem siebten Schwellenwert im Startmodus bestimmt, ob in den normalen Betriebsmodus gewechselt werden soll oder nicht.

9. Brennstoffzellensystem (10) nach Anspruch 1, weiterhin umfassend einen dritten Zeitermittlungsabschnitt zum Ermitteln einer normalen Betriebszeit der Brennstoffzelle (14); und
einen Retentionsraten-Berechnungsabschnitt zum Berechnen einer Ausgangsretentionsrate, die für die Brennstoffzelle (14) relevant ist, wobei die Ausgangsretentionsrate ein Verhältnis eines Ausgangs, der sich auf die Brennstoffzelle (14) zu einem aktuellen Zeitpunkt bezieht, in Bezug auf einen Ausgang ist, der sich auf die Brennstoffzelle (14) zu dem Zeitpunkt bezieht, zu dem der Normalbetrieb gestartet wurde,
wobei die Steuereinheit (52) basierend auf der normalen Betriebszeit und der Ausgangsretentionsrate in dem normalen Betriebsmodus bestimmt, ob der Oxidationsmittelverarmungsprozess auszuführen ist oder nicht.

10. Brennstoffzellensystem (10) nach Anspruch 1, weiterhin umfassend einen Erfassungsabschnitt für geladene Leistung zum Erfassen von Informationen über geladene Leistung, die für eine Ladungsmenge der Sekundärbatterie (82) relevant ist,
wobei die Steuereinheit (52) basierend auf den Ladungsleistungsinformationen und einem achten Schwellenwert nach dem Umschalten aus dem normalen Betriebsmodus zu dem Volllademodus der Sekundärbatterie (82) bestimmt, ob zu dem normalen Betriebsmodus zurückgekehrt oder ein Konstantspannungsladen der Sekundärbatterie (82) ausgeführt wird.

11. Brennstoffzellensystem (10) nach Anspruch 10, bei dem die Steuereinheit (52) basierend auf den Ladungsleistungsinformationen und dem neunten Schwellenwert in dem Volllademodus der Sekundärbatterie (82) nach dem Starten des Konstantspannungsladens bestimmt, ob die Energieerzeugung zu stoppen ist oder nicht.

12. Brennstoffzellensystem (10) nach Anspruch 10, weiterhin umfassend einen vierten Zeitermittlungsabschnitt zum Ermitteln einer Konstantspannungsladezeit der Sekundärbatterie (82),
wobei die Steuereinheit (52) basierend auf der Konstantspannungsladezeit und dem zehnten Schwellenwert im Volllademodus der Sekundärbatterie (82) nach dem Starten des Konstantspannungsladens bestimmt, ob die Energieerzeugung zu stoppen ist.

13. Brennstoffzellensystem (10) nach Anspruch 10, weiterhin umfassend einen vierten Zeitermittlungsabschnitt zum Ermitteln einer Konstantspannungsladezeit der Sekundärbatterie (82),
wobei die Steuereinheit (52) basierend auf der Konstantspannungsladezeit und einem elften Schwellenwert im Volllademodus der Sekundärbatterie (82) nach dem Starten des Konstantspannungsladens bestimmt, ob der Oxidationsmittelverarmungsprozess auszuführen ist oder nicht.

14. Transporteinrichtung umfassend das Brennstoffzellensystem (10) nach einem der Ansprüche 1 bis 13.

## Revendications

1. Système de pile à combustible (10) comportant :
une pile à combustible (14) comprenant une anode et une cathode (20) ;
une batterie secondaire (82) électriquement connectée à la pile à combustible (14) ;
une section d'alimentation en oxydant pour alimenter la cathode (20) en oxydant ; et
une commande (52) pour commander une opération d'alimentation de la section d'alimentation en oxydant qui alimente la cathode (20) en oxydant ;
**caractérisé en ce que**
la commande (52) commande l'opération d'alimentation de la section d'alimentation en oxydant de telle manière qu'un nombre de fois où un processus de privation d'oxydant est exécuté dans un mode de démarrage et un nombre de fois où le processus de privation d'oxydant est exécuté dans un mode de charge complète de la batterie secondaire (82) sont tous deux supérieurs à un nombre de fois où le processus de privation d'oxydant est exécuté dans un mode de fonctionnement normal.

2. Système de pile à combustible (10) selon la revendication 1, comprenant en outre une première section d'obtention de temps pour obtenir une durée de démarrage de la pile à combustible (14),
dans lequel la commande (52) détermine si le processus de privation d'oxydant doit être exécuté ou non en se fondant sur la durée de démarrage et une première valeur seuil dans le mode de démarrage.

3. Système de pile à combustible (10) selon la revendication 1, comprenant en outre une section d'obtention de puissance pour obtenir une information de puissance concernant une puissance de la pile à combustible (14),
où la commande (52) détermine si le processus de privation d'oxydant doit être exécuté ou non en se fondant sur l'information de puissance et une seconde valeur seuil dans le mode de démarrage.

4. Système de pile à combustible (10) selon la revendication 1, comprenant en outre une section d'obtention de température (38) pour obtenir une température de la pile à combustible (14),
où la commande (52) détermine si le processus de privation d'oxydant doit être exécuté ou non en se fondant sur la température de la pile à combustible (14) et une troisième valeur seuil dans le mode de démarrage.

5. Système de pile à combustible (10) selon la revendication 1, comprenant en outre une section d'obtention de tension (60) pour obtenir une information de tension concernant une tension de la pile à combustible (14),
où la commande (52) détermine si le processus de privation d'oxydant doit être arrêté ou non en se fondant sur l'information de tension et une quatrième valeur seuil.

6. Système de pile à combustible (10) selon la revendication 1, comprenant en outre une seconde section d'obtention de temps pour obtenir une durée de processus de privation d'oxydant,
où la commande (52) détermine si le processus de privation d'oxydant doit être arrêté ou non en se fondant sur la durée du processus de privation d'oxydant et une cinquième valeur seuil.

7. Système de pile à combustible (10) selon la revendication 1, comprenant en outre une section d'obtention de puissance pour obtenir une information de puissance concernant une puissance de la pile à combustible (14),
où la commande (52) détermine s'il faut passer au mode de fonctionnement normal ou non en se fondant sur l'information de puissance et une sixième valeur seuil dans le mode de démarrage.

8. Système de pile à combustible (10) selon la revendication 1, comprenant en outre une section d'obtention de température (38) pour obtenir une température de la pile à combustible (14),
où la commande (52) détermine s'il faut passer au mode de fonctionnement normal ou non en se fondant sur la température de la pile à combustible (14) et une septième valeur seuil dans le mode de démarrage.

9. Système de pile à combustible (10) selon la revendication 1, comprenant en outre une troisième section d'obtention de temps pour obtenir une durée de fonctionnement normal de la pile à combustible (14) ; et
une section de calcul de taux de maintien pour calculer un taux de maintien de puissance concernant la pile à combustible (14), le taux de maintien de puissance étant un rapport entre une puissance de la pile à combustible (14) à un instant présent et une puissance de la pile à combustible (14) au moment du démarrage du fonctionnement normal,
où la commande (52) détermine si le processus de privation d'oxydant doit être exécuté ou non en se fondant sur la durée du fonctionnement normal et le taux de maintien dans le mode de fonctionnement normal.

10. Système de pile à combustible (10) selon la revendication 1, comprenant en outre une section de détection de puissance chargée pour détecter une information concernant un niveau de charge de la batterie secondaire (82),
où la commande (52) détermine s'il faut revenir au mode de fonctionnement normal ou s'il faut démarrer un chargement à tension constante de la batterie secondaire (82), en se fondant sur l'information de puissance chargée et sur une huitième valeur seuil après être passé du mode de fonctionnement normal au mode de charge complète de la batterie secondaire (82).

11. Système de pile à combustible (10) selon la revendication 10, où la commande (52) détermine s'il faut arrêter la production de puissance ou non en se fondant sur l'information de puissance chargée et la neuvième valeur seuil dans le mode de charge complète de la batterie secondaire (82) après le démarrage du chargement à tension constante.

12. Système de pile à combustible (10) selon la revendication 10, comprenant en outre une quatrième section d'obtention de temps pour obtenir une durée de chargement à tension constante de la batterie secondaire (82),
où la commande (52) détermine si la génération de puissance doit être arrêtée ou non, en se fondant sur le temps de chargement à tension constante et sur la dixième valeur seuil dans le mode de charge complète de la batterie secondaire (82) après le démarrage du chargement à tension constante.

13. Système de pile à combustible (10) selon la revendication 10, comprenant en outre une quatrième section d'obtention de temps pour obtenir une durée de chargement à tension constante de la batterie secondaire (82),
où la commande (52) détermine si le processus de privation d'oxydant doit être exécuté ou non, en se fondant sur le temps de chargement à tension constante et sur une onzième valeur seuil dans le mode de charge complète de la batterie secondaire (82) après le démarrage du chargement à tension constante.

14. Équipement de transport comprenant le système de pile à combustible (10) selon l'une des revendications 1 à 13.
